# EUROPEAN PATENT APPLICATION

(11) **EP 4 102 096 A1**
(43) Date of publication of application: **14.12.2022**
(21) Application number: 20917296.4
(22) Date of filing: 15.12.2020
(51) Int. Cl.: F16F 9/02, F16F 9/32

(54) **LENGTH-ADJUSTABLE PNEUMATIC SPRING**

(30) Priority: 07.02.2020 ES 202030211 U
(71) Applicant: Junior Derqui, D.L., 41500 Alcalá de Guadaira (Sevilla) (ES)
(72) Inventor: OCAÑA DERQUI, Juan Jose, 41011 SEVILLA (ES)
(74) Representative: Durán-Corretjer, S.L.P.
(86) International application number: PCT/ES2020/070793
(87) International publication number: WO 2021/156524

(57) **Abstract**

Pneumatic spring of adjustable length which comprises:
- a cylinder,
- a rod that can move inside said cylinder,
- a first attachment element screwed on the operational end of the rod,
- a second attachment element screwed on the operational end of the cylinder,
the pneumatic spring comprising a locking device for locking the position of the first attachment element, said locking device comprising an adjustment part which comprises a threaded portion, said adjustment part being screwed on the operational end of the rod, and said adjustment part being in contact with the aforementioned first attachment element in such a way that the adjustment part acts as a lock nut so as to lock the position of the aforementioned first attachment element, characterized in that the rod has at least one mark on the adjustment part to indicate an adjusted length of the spring.

## Description

The present invention relates to a pneumatic spring of adjustable length that can be used in industry in general, such as in the automotive sector or the furniture sector, etc. Pneumatic springs are usually used to raise or lower heavy items in a controlled manner.

The pneumatic springs of adjustable length found in the prior art comprise an attachment element at each end. The final length between the attachment elements of these springs may be adjusted, for example, by replacing one of the attachment elements with another of a different length. As a result, the final length between the attachment elements of the spring is increased or reduced depending on the new length of the attachment element.

In the present document, the expression "final length between attachment elements" refers to the distance between the attachment elements when the spring is in its position of maximum extension.

Another way of adjusting the final length between attachment elements in known pneumatic springs is by placing auxiliary parts between the attachment elements of the spring. By virtue of the auxiliary parts, the position of the attachment elements is shifted and the final length between attachment elements is increased.

One example of a pneumatic spring of adjustable length can be found in the document for Spanish utility model ES1075363U, which discloses a spring of adjustable length with additional parts designed to be added to the spring or to replace parts of the spring. To adjust the final length of the spring it is necessary to remove the attachment elements from the ends. Moreover, multiple parts are needed in order to have a range of adjustable distances, which limits the flexibility of the spring and entails extra costs.

The aim of the present invention is to disclose a pneumatic spring of adjustable length which solves the abovementioned problems found in known springs of adjustable length, enabling simple, rapid and reliable adjustment of the maximum length.

In particular, the present invention discloses a pneumatic spring of adjustable length which comprises:
- a cylinder,
- a rod that can move inside said cylinder,

the cylinder and the rod defining two opposite operational ends, one located at the end of the cylinder and the other at the end of the rod and both operational ends having a threaded portion,
   - a first attachment element screwed on the operational end of the rod,
   - a second attachment element screwed on the operational end of the cylinder,
characterized in that it comprises a locking device for locking the position of the first attachment element, said locking device comprising an adjustment part which comprises a threaded portion, said adjustment part being screwed on the operational end of the rod, and said adjustment part being in contact with the aforementioned first attachment element in such a way that the adjustment part acts as a lock nut so as to lock the position of the aforementioned first attachment element.

In order to adjust the final length between the two attachment elements of the spring, the first attachment element is adjusted by screwing along the thread on the end of the rod. Next, the adjustment part, on coming into contact with the first attachment element, locks the position of said first attachment element. As a result, the final length between attachment elements is adjusted very simply and rapidly, without the need for additional parts or tools.

According to one aspect of the present invention, it has at least one mark on the adjustment part to indicate an adjusted length of the spring.

Said mark or marks facilitate fitting, and may also serve to prevent the adjustment part from becoming unscrewed to the extent that it comes out and falls.

Preferably, in a first embodiment, said mark is an end mark which is located on the threaded portion of the rod indicating a maximum adjustable length. Preferably, the rod has a series of marks which form a scale indicating the adjusted distance of the spring. More preferably, the aforementioned series is located on a non-threaded portion of the rod. Even more preferably, the adjustment part comprises a through hole in which the aforementioned operational end of the rod is inserted.

In a second embodiment, said mark may be part of a series of marks which form a scale indicating the adjusted distance of the spring. The two embodiments may be combined or may be implemented independently.

The mark or marks may be carved into the material and/or, more preferably may be in colour. For example, they may be painted or adhesively bonded on the surface. More preferably, the colour of the end piece is different to the colour of the marks forming part of the indicator scale.

Optionally, the adjustment part comprises a through hole in which the aforementioned operational end of the rod is inserted.

Preferably, the adjustment part has rings defined by grooves and a head in which the threaded portion is located, and said rings may be removable so as to reduce the length of the adjustment part. This makes it possible to prevent the adjustment part from hitting against the body of the cylinder when the spring is compressed.

Advantageously, the threaded portion is housed inside the head of the adjustment part. In the present invention, the adjustment part itself comprises a threaded portion. However, there is the option for the adjustment part to house an element with a threaded portion, such as for example a nut.

Advantageously, the head of the adjustment part has flat surfaces arranged on opposite sides of the head, said flat surfaces being parallel to one another. These surfaces make it possible to clamp the adjustment part more firmly than would be achieved manually, using tools.

Optionally, the first attachment element comprises a bore and a threaded portion, the operational end of the rod being screwed in said threaded portion and inserted in said bore. In the present invention, the first attachment element itself comprises a threaded portion, as in the case of the adjustment part. However, there is the option for the first attachment element to house an element with a threaded portion, such as for example a nut.

For a better understanding of the invention it is accompanied, by way of non-limiting illustrative example, by drawings relating to an exemplary embodiment of a spring of adjustable length according to the present invention.
Figure 1 shows a view in elevation of an embodiment of a spring of adjustable length according to the present invention.
Figure 2 shows a perspective view of the adjustment part.
Figure 3 shows a section through the adjustment part.
Figure 4 shows a view in elevation of an end of the spring of the embodiment of Figure 1 with the rod slightly inserted in the attachment element and the adjustment part separated from the attachment.
Figure 5 shows a cross section along the plane V - V of Figure 4.
Figure 6 shows a view in elevation of an end of the spring of the embodiment of Figure 1 with the rod slightly inserted in the attachment element and the adjustment part in contact with the attachment.
Figure 7 shows a cross section along the plane VII - VII of Figure 6.
Figure 8 shows a view in elevation of an end of the spring of the embodiment of Figure 1 with the rod fully inserted in the attachment element and the adjustment part in contact with the attachment.
Figure 9 shows a cross section along the plane IX - IX of Figure 8.
Figure 10 shows a second embodiment according to the present invention.
Figure 11 shows a cross section of a third embodiment according to the present invention, with the adjustment part in contact with the attachment element (normal use).
Figure 12 shows a cross section according to the third embodiment in which the rod is fully inserted in the attachment element and the adjustment part is in contact with the attachment. The mark is not visible from the end. The attachment element of the spring is connected by means of a through hole.
Figure 13 shows a cross section according to the fourth embodiment in a position in which the rod is fully inserted in the attachment element and the adjustment part is in contact with the attachment, the attachment element of the spring being connected by means of a ball joint.
Figure 14 shows a cross section of a fifth embodiment in which the attachment element is at an angle with respect to the rod.
Figure 15 shows the embodiment of Figure 14 in which the mark indicates that the maximum adjustable length has been reached (or exceeded).
Figure 16 shows an embodiment detail corresponding to the embodiment of Figure 15.
Figure 17 specifically shows an additional embodiment in which the attachment element has a different configuration, with a flattened segment of smaller section.

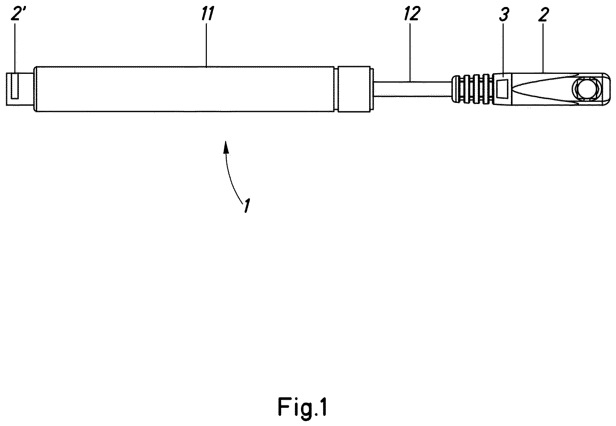

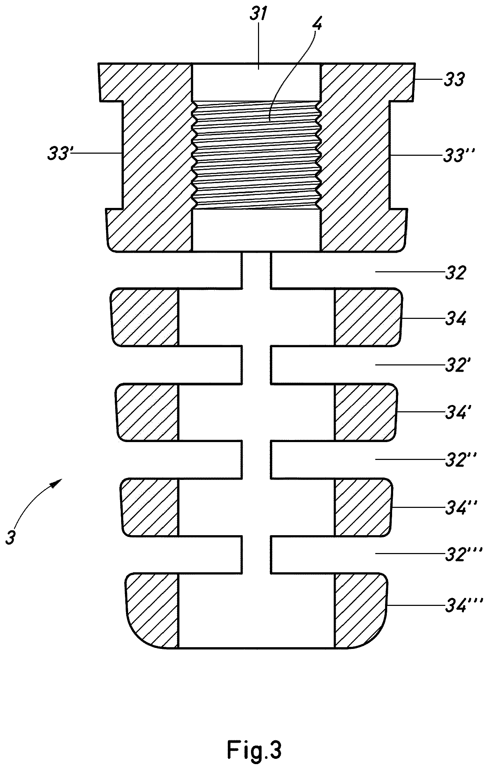

Figure 1 shows an embodiment of a gas spring 1, according to the present invention, which comprises a cylinder 11 connected to a rod 12, these two elements defining a pair of opposite operational ends. The spring 1 also comprises a first attachment element 2 at the operational end of the rod 12 and a second attachment element 2' at the operational end of the cylinder 11. Also connected to the operational end of the rod 12 and in contact with the first attachment element 2 is an adjustment part 3 which comprises a threaded portion 4 (see Figure 3), locking the position of the attachment element 2.

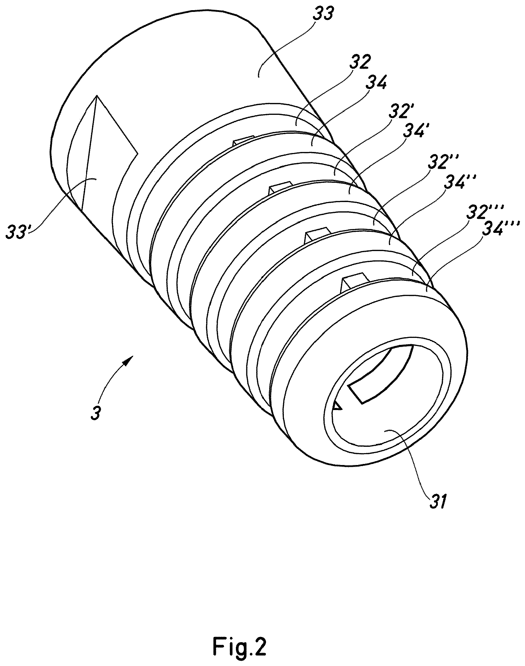

As can be seen in Figures 2 and 3, the adjustment part 3 comprises a through hole 31 through which the rod 12 of the spring 1 is inserted and has grooves 32, 32', 32", 32‴ which divide the adjustment part 3 into a head 33 and a series of rings 34, 34', 34", 34‴. The head 33 is the part of the adjustment part 3 containing the threaded portion 4, and has flat surfaces 33', 33", arranged on opposite sides, which are parallel to one another.

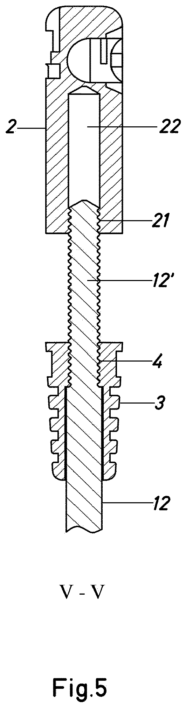

Both the attachment element 2 and the adjustment part 3 are connected to the rod 12 by screwing, since the attachment element 2 also comprises a threaded portion 21 (see Figures 5, 7 and 9). To this end, the rod 12 has a screw thread 12' at its operational end, onto which is screwed, first, the adjustment part 3 and then the attachment element 2. The attachment element 2 also comprises a bore 22 to receive the rod 12 of the spring 1.

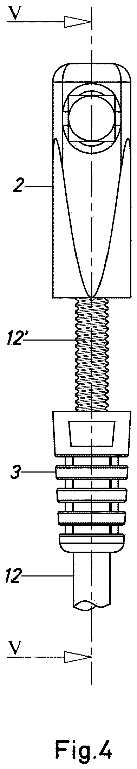

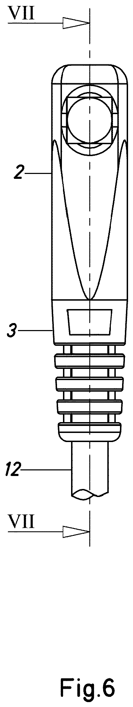

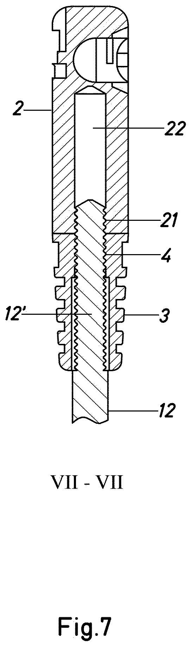

The configuration of Figures 4 and 5 corresponds to an adjustment configuration; in other words, the final length between attachment elements 2, 2' may be adjusted by screwing the first attachment element 2. As can be seen, the adjustment part 3 is screwed as far as the end of the screw thread 12' of the rod 12. This position results in the greatest final length between attachment elements 2, 2' of the spring 1, since the rod 12 is inserted a minimum distance in the bore 22 of the attachment element 2. To secure the spring 1 in this configuration it is necessary to screw the adjustment part 3 until it comes into contact with the attachment element 2 (see Figures 6 and 7) and thus lock the position of both the attachment element 2 and the adjustment part 3. In short, the adjustment part 3 acts as a lock nut for the attachment element 2.

When the adjustment part 3 is in contact with the attachment element 2 (Figures 6 to 9), the rotation of both elements is blocked. If it is desired to change the final length between attachment elements 2, 2' of the spring 1, it is necessary to unscrew the adjustment part 3 to bring it back to the adjustment configuration (Figures 4 and 5) and screw the attachment element 2 as far as the position which corresponds to the desired final length between attachment elements 2, 2'. Once this position has been reached, the adjustment part 3 must be screwed until it comes into contact with the first attachment element 2 so as to again lock the two elements, i.e. the attachment element 2 and the adjustment part 3.

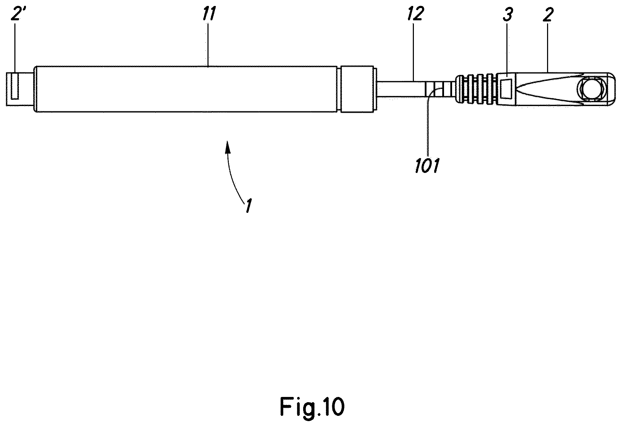

Figures 10 to 18 present different embodiments of the present invention. In these figures, identical or similar elements bear the same reference numerals.

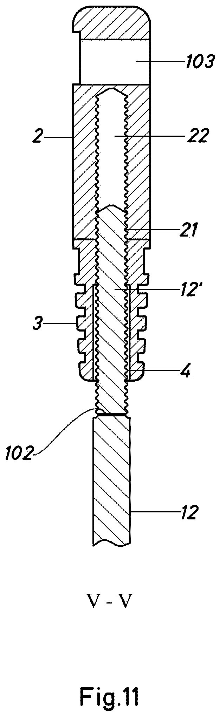

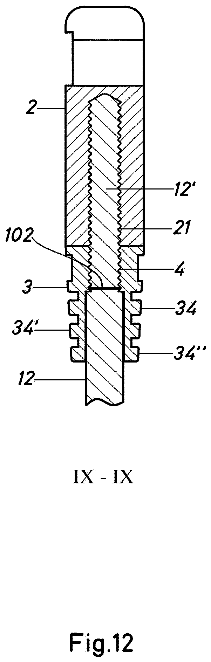

Figure 10 shows a second embodiment of the present invention. Said embodiment includes a series of marks 101 located on a non-threaded portion of the rod 12, which form a scale (numbered or otherwise) and which make it possible to determine the length of rod inserted in the attachment element 2. The marks 101 are located in the intermediate area adjacent to the threaded portion of the rod. Said marks may preferably be (partially) hidden by the adjustment part 3 as it moves along. Figures 11 and 12 show a third embodiment according to the present invention. Elements which are identical or equivalent to the previous embodiment have been designated using identical reference numerals. This embodiment includes a mark which indicates a minimum length which must remain inserted in the attachment element 2 in order for the attachment to be secure, i.e. the maximum removable length, which is the case of the position shown in Figure 11. The end mark 102 is located on the threaded portion 12' of the rod 12. The minimum length is a length which ensures that the rod will not become detached from the attachment element under the effect of external forces or tensions to which it may be subjected. Likewise, it indicates the maximum removable length that can be removed by screwing. Figure 11 shows a side view in section of the second embodiment with the end mark 102 which indicates the minimum length of the threaded portion of the rod 12' which must remain inserted in the attachment element 2. As can be seen, when the end mark 102 emerges from under the adjustment part 3, very little of the threaded segment 12' remains inserted in the attachment element, such that there is a risk of the attachment element coming off, for example following an impact. Said marks, 101 and 102, may be in different colours, to distinguish between them. For example, the marks 101 may be white, indicating the length of the rod inserted in the attachment element 2 and the end mark or marks 102 may be red, indicating the minimum length which must remain inserted in the attachment element 2. Both the end mark 102 and the series of marks 101 indicate an adjusted length of the spring. According to the present invention, it is possible to implement the end mark but not the series of marks forming the scale, and vice versa.

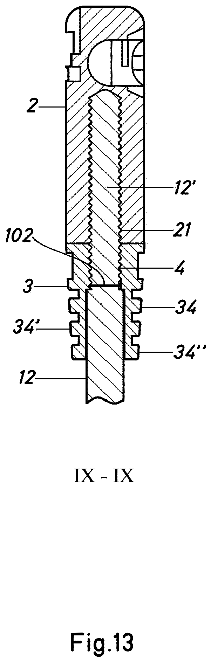

Figure 13 shows a position of the mark 102 with respect to the attachment element 2 when the rod 12 has been fully inserted in said element. The end mark 102 is not visible from the outside. In this embodiment, the upper part of the spring is connected by means of a ball joint.

In the figures, the location of the end mark 102 has not been shown in structural detail, but purely conceptually. The location of the mark will depend on each specific use to which the spring is put, it being necessary for the end mark 102 to be visible before reaching a minimum length. The mark may consist of an O-ring of a different colour to the rod, for example red.

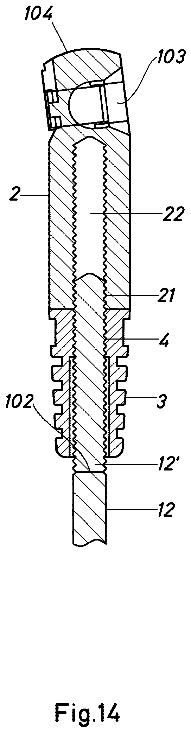

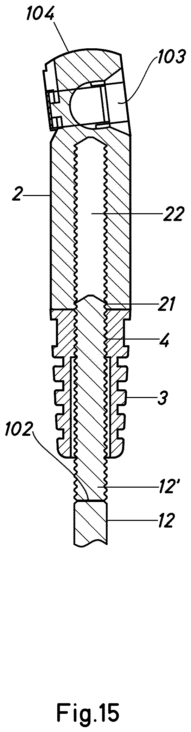

In another embodiment, in Figures 14 and 15, the attachment element 2 comprises a tip 104 oriented at a predetermined angle so as to be able to place the pneumatic spring in configurations in which the upper and lower points of attachment are not aligned, and a through hole 103. It can be seen in Figure 15 that the end mark 102, consisting of an O-ring surrounding the initial segment of the screw thread, is visible.

The embodiment shown in Figures 14 and 15 is similar that shown in Figures 11 and 12 except that the hole 103 is not a through hole. Said configuration has the advantage of not requiring securing means such as nuts or securing pins.

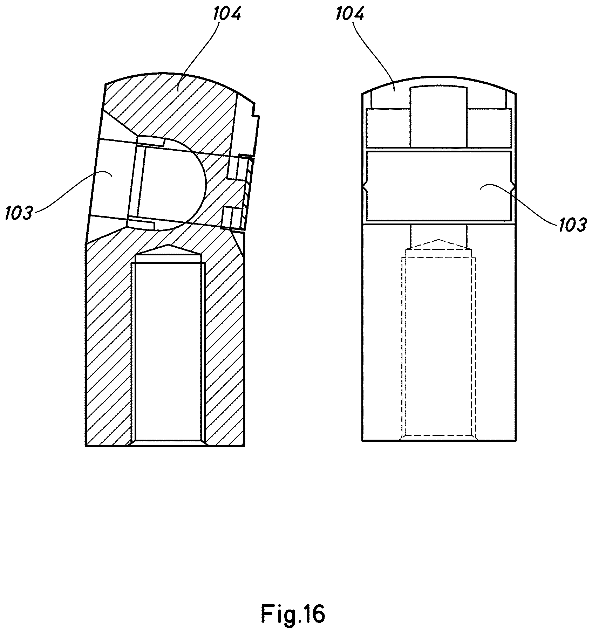

Figure 16 shows one possible embodiment detail, of the embodiment of Figures 14 and 15. The attachment element is produced with an obtuse angle so that the pneumatic spring can be placed in configurations in which the upper and lower points of attachment are not aligned.

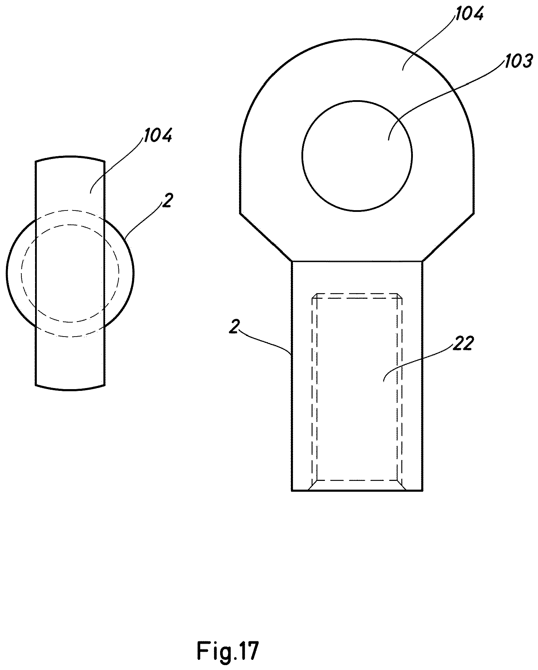

In Figure 17, the attachment element has a narrowing 104 in the segment which connects the threaded part to the part which will be connected to the element for attaching the spring. This embodiment has the advantage of being more lightweight and is suitable for solutions requiring less weight and in which the tensions to which the spring are subjected are not very high.

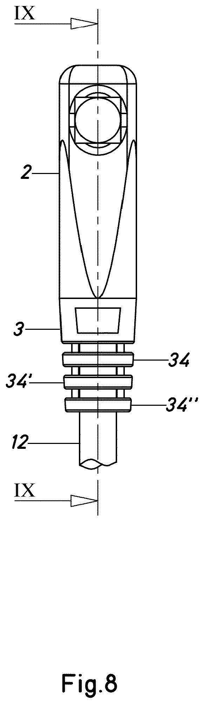

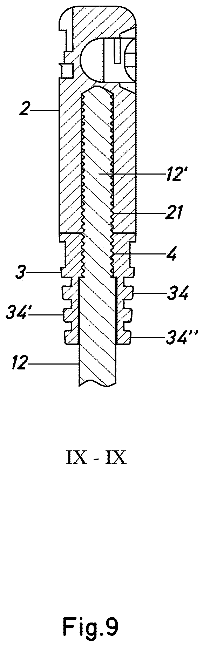

To reduce the final length of the spring 1 to the minimum, the adjustment part 3 is positioned at the end of the screw thread 12' of the rod 12 and the attachment element 2 is screwed until it comes into contact with the adjustment part 3, as shown in the locking position of Figures 8 and 9, in which it can be seen that the rod 12 is inserted as far as the end of the bore 22 of the attachment element 2.

It is possible for the final length of the spring 1 to be such that the adjustment part 3 hits against the cylinder 11 body during operation of the spring 1. To prevent this from happening, the rings 34, 34', 34", 34'" of the adjustment part 3 may be removed so that it takes up less space. For example, in the case of Figures 8 and 9, the last ring 34'" of the adjustment part 3 has been removed. The connection between the rings 34, 34', 34", 34‴ of the adjustment part 3 is sufficiently strong to withstand the forces typically experienced during operation of the spring 1.

Although only one operational end of the spring has been shown in the examples of the figures, specifically the operational end of the rod, the other operational end may also comprise a threaded rod with an adjustment part in which a nut is housed, such that the final length between attachment elements may be adjusted from either end.

The adjustment part of the exemplary embodiments described is composed of a single component. However, it is also possible for the adjustment part to be composed of several components which may be connected to one another. For example, the adjustment part may also take the form of two halves which are connected to and separated from one another manually.

The adjustment part may house internally an element with a threaded portion such as, for example, a nut.

In this case the adjustment part is screwed on the rod by means of said element.

Although the invention has been presented and described with reference to embodiments of the invention, it will be appreciated that these embodiments are non-limiting and therefore there may be many variable details, structural or otherwise, that may be obvious to person skilled in the art after interpreting the material disclosed in this description, claims and drawings. Thus, all variants and equivalents are included within the scope of the present invention if they can be considered to be included within the broadest scope of the following claims.

## Claims

1. Pneumatic spring of adjustable length which comprises:
- a cylinder,
- a rod that can move inside said cylinder,
the cylinder and the rod defining two opposite operational ends, one located at the end of the cylinder and the other at the end of the rod and both operational ends having a threaded portion,
- a first attachment element screwed on the operational end of the rod,
- a second attachment element screwed on the operational end of the cylinder,
the pneumatic spring comprising a locking device for locking the position of the first attachment element, said locking device comprising an adjustment part which comprises a threaded portion, said adjustment part being screwed on the operational end of the rod, and said adjustment part being in contact with the aforementioned first attachment element in such a way that the adjustment part acts as a lock nut so as to lock the position of the aforementioned first attachment element, **characterized in that** the rod has at least one mark on the adjustment part to indicate an adjusted length of the spring.

2. Spring, according to Claim 1, **characterized in that** said mark is located on the threaded portion of the rod indicating a maximum adjustable length.

3. Spring, according to Claim 1 or 2, **characterized in that** the mark has a colour which is different to the colour of the rod.

4. Spring, according to Claim 2 or 3, **characterized in that** said mark consists of an O-ring.

5. Spring, according to any of Claims 2 to 4, **characterized in that** the mark is located at the start of the aforementioned threaded portion of the rod.

6. Spring, according to any of the preceding claims, **characterized in that** the rod has a series of marks which form a scale indicating the adjusted distance of the spring.

7. Spring, according to the preceding claim, **characterized in that** the aforementioned series is located on a non-threaded portion of the rod.

8. Spring, according to any of the preceding claims, **characterized in that** the adjustment part comprises a through hole in which the aforementioned operational end of the rod is inserted.

9. Spring, according to any of the preceding claims, **characterized in that** the adjustment part has rings defined by grooves and a head in which the threaded portion is located.

10. Spring, according to the preceding claim, **characterized in that** the threaded portion is housed inside the head of the adjustment part.

11. Spring, according to Claim 9, **characterized in that** the rings of the adjustment part are removable so as to reduce the length of the adjustment part.

12. Spring, according to any of Claims 3 to 5, **characterized in that** the head of the adjustment part has flat surfaces arranged on opposite sides of the head, said flat surfaces being parallel to one another.

13. Spring, according to any of the preceding claims, **characterized in that** the first attachment element comprises a bore and a threaded portion, the operational end of the rod being screwed in said threaded portion and inserted in said bore of the first attachment element.
